# EUROPEAN PATENT SPECIFICATION

(11) **EP 2 100 291 B1**
(45) Date of publication and mention of the grant of the patent: **17.04.2019**
(21) Application number: 07870076.2
(22) Date of filing: 28.12.2007
(51) Int. Cl.: G09G 5/00, G06F 17/21

(54) **INVARIANT REFERENCING IN DIGITAL WORKS**
INVARIANTE REFERENZIERUNG IN DIGITALEN ARBEITEN
RÉFÉRENCEMENT INVARIANT DANS DES TRAVAUX NUMÉRIQUES

(30) Priority: 29.12.2006 US 882870 P; 29.03.2007 US 693677; 28.09.2007 US 976286 P
(43) Date of publication of application: 16.09.2009
(73) Proprietor: Amazon Technologies, Inc., Reno, NV 89507 (US)
(72) Inventor: RYAN, Thomas A., Seattle, WA 98144 (US); GOODWIN, Robert L., Reno, Nevada 89507 (US); LATTYAK, John, Seattle, WA 98144 (US)
(74) Representative: D Young & Co LLP
(86) International application number: PCT/US2007/089105
(87) International publication number: WO 2008/083316

(56) References cited:
- WO-A1-97/22107
- US-A1- 2004 139 400
- US-A1- 2005 055 635
- US-A1- 2005 138 551
- US-A1- 2006 020 469
- US-A1- 2006 230 340
- US-A1- 2006 256 083
- US-B1- 6 351 750

## Description

### CROSS-REFERENCE TO RELATED APPLICATIONS

This application claims the benefit of the filing date of U.S. Provisional Application Serial No. 60/882,870 (AM2-0055USP1), filed on 29 December 2006, and U.S. Provisional Application No. 60/976,286 (AM2-0055USP2), filed 28 September 2007, and is a continuation of U.S. Patent Application No. 11/693,677 (AM2-0055US), filed 29 March 2007, all of which are entitled "Invariant Referencing in Digital Works".

### BACKGROUND

Electronic distribution of information has gained importance with the proliferation of personal computers and wide area networks such as the Internet. With the widespread use of the Internet, it has become possible to distribute large, coherent units of information, such as books, using electronic technologies. Books distributed using electronic technologies are commonly referred to as electronic books ("eBooks"). Various entities make eBooks available for download over ordinary Internet connections, such as broadband and dialup connections.

Typically, digital works are structured as virtual frames presented on a display device, and a user may turn or change from one virtual frame or "page" of electronic content to another. The term "page" as used herein refers to a collection of content that is presented at one time on a display. Thus, "pages" as described herein are not fixed permanently, and may be redefined or repaginated based on variances in display conditions, such as screen size, font type or size, margins, line spacing, resolution, or the like.

EBooks may be displayed and read on a variety of different display devices, such as computer monitors, portable digital assistants (PDAs), pocket personal computers (PCs), and specialized eBook reader devices, for example. The screen size of the various display options may vary greatly from one display device to another. For example, a computer monitor may have a screen size of twenty-one inches (measured diagonally) or more, while a pocket PC may have a screen size as small as a few inches. Simply by virtue of the larger screen size, more content can be displayed on the computer monitor at one time than on the pocket PC. Thus, content that appears on a certain page (e.g., page 10) of an eBook when displayed on a computer monitor may appear on a much later page (i.e., page 50) when displayed on a pocket PC or some other display device having a smaller screen size.

Font type also affects how much textual content can displayed on a display screen. Different fonts may have a different number of characters per inch and may have uniform or variable character widths. Perhaps more significantly, the size of the font also affects the amount of content displayed on a display screen. Generally, the smaller the font size, the more text that will fit on the display screen, and *vice versa.*

These and other display conditions (e.g., screen resolution, margins, line spacing, etc.) affect the amount of content that can be displayed on a given display screen. Accordingly, it may be difficult or impossible for a user reading an eBook on one display device to meaningfully communicate a page cite to a reader of the same eBook on another display device, because one or more of the foregoing display conditions may be different. For example, when a reader cites a meaningful quotation on page 27, line 3, this citation is likely to not be accurate for most other readers.

Another problem may arise when a user is in the middle of reading an eBook and decides to change the font type, font size, margins, or some other display condition. In that case, the user probably knows what page he or she was reading prior to the change in display condition. However, after the change, the content the user was previously reading will likely be found on a different page of the eBook, and the user may not be able to easily locate the place where he or she left off.

Thus, there remains a need to improve a method of identifying or referencing material within electronic content to improve a reader's ability to navigate within an eBook and to better identify a location within the eBook content.

Document US 2006/230340 A1 (PARSONS MARCELLA B [US] ET AL) describes an interactive book format which allows to display ebook-files on a device. The method includes pagination settings. If pagination is activated, page-numbers are displayed in respect to zoom at 100%.

### SUMMARY

In view of the above, this disclosure describes ways of invariantly referencing locations within an electronic book, electronic content, or other digital work regardless of screen size, font size, or other variations in display of the digital work according to claims 1, 13 and 14.

### BRIEF DESCRIPTION OF THE DRAWINGS

The detailed description is set forth with reference to the accompanying figures. In the figures, the left-most digit(s) of a reference number identifies the figure in which the reference number first appears. The use of the same reference numbers in different figures indicates similar or identical items.
FIG. 1 illustrates an implementation in which two display devices are displaying content of the same electronic book ("eBook"), along with a conventional page number on which the displayed content appears.
FIG. 2 illustrates another implementation in which two display devices are displaying content of the same eBook, along with a conventional page number on which the displayed content appears.
FIG. 3 illustrates another implementation in which two exemplary display devices are displaying content of the same eBook, along with a location reference identifier identifying a location in the eBook at which the displayed content appears.
FIG. 4 illustrates an exemplary eBook reader device according to one implementation.
FIG. 5 is a flowchart showing an exemplary method of processing an eBook or other digital work to assign location reference identifiers prior to distribution to a consumer.
FIG. 6 is a flowchart showing an exemplary method of processing an eBook or other digital work to assign location reference identifiers after distribution to a consumer.
FIG. 7 is a block diagram showing several exemplary methods of partitioning an eBook or other digital work.
FIG. 8 shows how an eBook or other digital work might be displayed on the eBook reader device of FIG. 4, according to one exemplary display method.
FIG. 9 shows how an eBook or other digital work might be displayed on a portable digital assistant (PDA), according to another exemplary display method.
FIG. 10 is a schematic diagram illustrating an exemplary method of providing location reference identifiers for an eBook or other digital work, based on a byte-count or other unit of data.
FIG. 11 is a flowchart showing an exemplary method of displaying an eBook or other digital work.
FIG. 12 is a block diagram illustrating an exemplary data structure of an eBook or other digital work.

### DETAILED DESCRIPTION

### Overview

As mentioned above, a problem arises when attempting to identify and communicate a page or position within a digital work, due to the variable screen size, font type or size, margins, line spacing, resolution, and other variable display conditions of the display devices. This problem arises because the virtual frames or "pages" displayed on the display device are not fixed permanently, and may be redefined or repaginated based on variances in the display conditions. This disclosure is directed to invariant referencing of locations within a digital work, which allows a user to accurately reference a location within a digital work, regardless of screen size, font type, font size, or other variations in display conditions of the digital work.

In exemplary implementations described herein, the invariant location referencing is described in the context of an electronic book ("eBook"). The terms "eBook" and "digital work" are used synonymously and, as used herein, may include electronic or digital representations of printed works, as well as original electronic or digital content that may include text, multimedia, hypertext and/or hypermedia. Examples of eBooks and/or digital works include, but are not limited to, books, magazines, newspapers, periodicals, journals, reference materials, telephone books, textbooks, anthologies, instruction manuals, proceedings of meetings, forms, directories, maps, etc. Also, while various aspects and features are described herein as applied to an eBook reader, the concepts may be implemented in other electronic devices or electronic readers besides eBook reader devices including, for example, personal computers, portable computers (e.g., laptops or pocket PCs), personal digital assistants (PDAs), portable gaming devices, wireless phones, and the like.

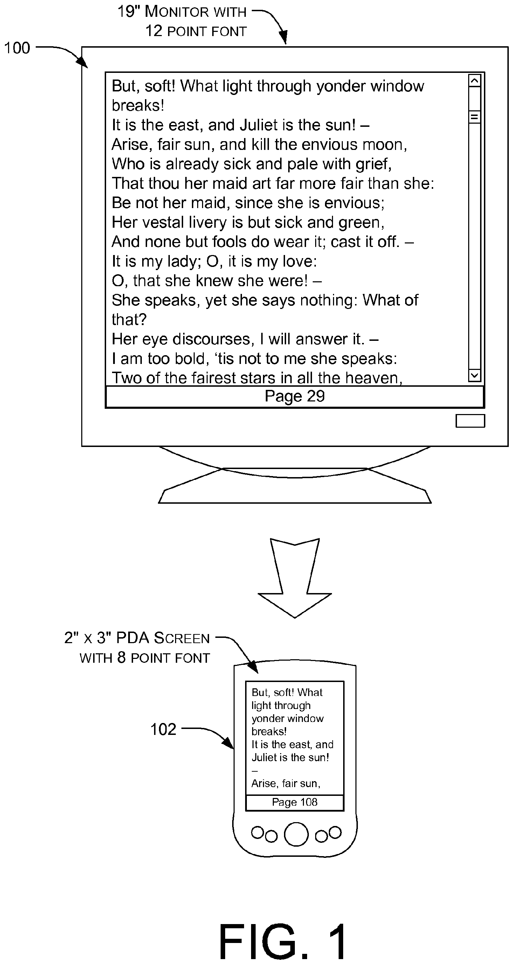

FIG. 1 illustrates the problems arising from variable display conditions of display devices. FIG. 1 shows two display devices displaying a portion of a Romeo and Juliet eBook. One display device is a nineteen-inch computer monitor 100 displaying the eBook in twelve point font. The second display device is a PDA 102 with a two-inch by three-inch screen, displaying the eBook in eight point font. As shown in FIG. 1, both display devices 100 and 102 are displaying content from the same location in the eBook. However, the computer monitor 100 indicates that the displayed content can be found on virtual frame or page twenty-nine of the eBook, while the PDA 102 indicates that the displayed content is on virtual page one hundred eight of the eBook. This difference in page number is due to the different display conditions of the two display devices, and makes it difficult for a user of the eBook to refer another user to specific content in the eBook. For example, a user reading Romeo and Juliet on the nineteen inch monitor 100, would be unable to easily tell a user reading Romeo and Juliet on the PDA 102 where to go to read Romeo's metaphor: "Juliet is the sun!"

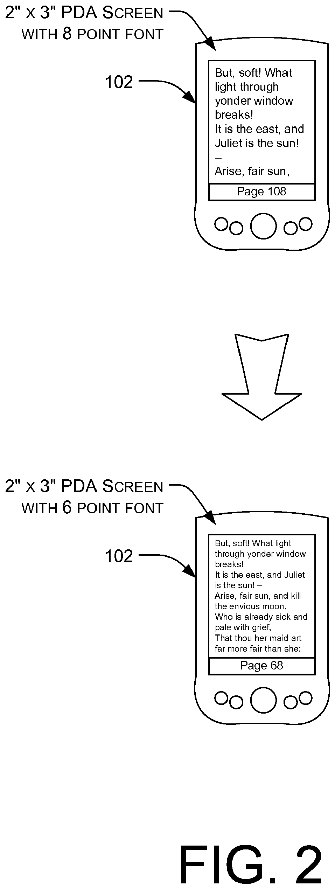

FIG. 2 illustrates a similar problem that arises if the user of one of the display devices decides to change the font size of the eBook, which would affect the virtual pagination of the eBook. For example, suppose that after putting on his reading glasses, the user reading Romeo and Juliet on the PDA 102 decides to change the font size to six point so that he does not have to turn the virtual page as frequently. In that case, Romeo's metaphor "Juliet is the Sun!" would appear on an earlier virtual page of the eBook, such as page sixty-eight for example, since more text would fit on each displayed page. The user may then have difficulty locating the point where he left off reading prior to the change in display conditions.

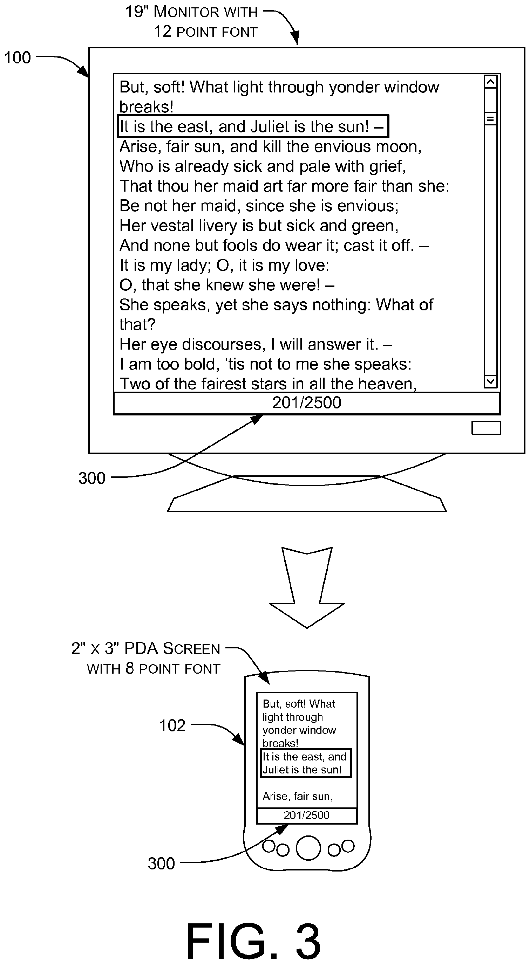

FIG. 3 illustrates an exemplary invariant location referencing scheme that remedies the forgoing problems related to variations in display conditions. As shown in FIG. 3, a Romeo and Juliet eBook is again displayed by two different display devices 100 and 102 having different display conditions. However, in this case, rather than displaying a virtual page number, which could change with changes in display conditions, the display devices display an invariant location reference identifier 300 corresponding to at least a portion of the displayed content 302 (shown in a text box for clarity). The invariant location reference identifier 300 is a unique identifier that corresponds to a specific location or segment of content 302 in the eBook, which is not affected by changes in screen size, font type or size, resolution, or other display conditions. Thus, the invariant location reference identifier 300 provides a reference to the assigned text 302 regardless of display conditions of the display device. This allows users to easily convey a location of specific eBook content to other users reading the same eBook on other display devices and/or under different display conditions. In addition, the invariant location referencing scheme allows the display device to identify a location where a reader left off reading, even after a change in font type or size, margins, line spacing, and/or some other display condition. Consequently, a user is readily able to find a place where he or she left off reading, regardless of any changes in the display conditions.

In the implementation shown in FIG. 3, the invariant location reference identifier 300 is provided along with a total number of location references in the eBook (in this case 201 is the invariant location reference identifier and 2500 is the total number of location references in the eBook). This allows a user to know approximately where in the eBook the displayed content is found (in this case a little less than a tenth of the way through the eBook). However, the total number of location reference identifiers need not be provided, and the invariant location reference identifier 300 may be displayed alone or in combination with one or more other types of information, such as chapter, section, eBook title, author, reading time, or the like. In other embodiments, the invariant location reference identifier 300 may be within a chapter, section or the like (e.g., "Chapter 7, 201/900" to indicate location 201 of a total of 900 location references within Chapter 7).

Also, the invariant location reference identifier 300 is shown in a navigation bar 302 along the bottom of the display screen. However, in other implementations, the invariant location reference identifier 300 may be displayed in other locations on the screen and may be displayed continuously, periodically, and/or upon request of the user. For example, the invariant location reference identifier 300 could be displayed along the top of the display screen, along a side of the display screen, overlaid over content of the eBook, in a drop-down menu, or in any other known user interface or display technique. In another example, invariant location reference identifiers may be displayed upon a user selecting or pointing to a portion of the eBook or a location in the eBook corresponding to the given invariant location reference identifier.

Before discussing these and other invariant location referencing implementations in detail, an exemplary display device will be briefly described to provide context for the invariant location referencing techniques.

### Exemplary eBook Reader Device

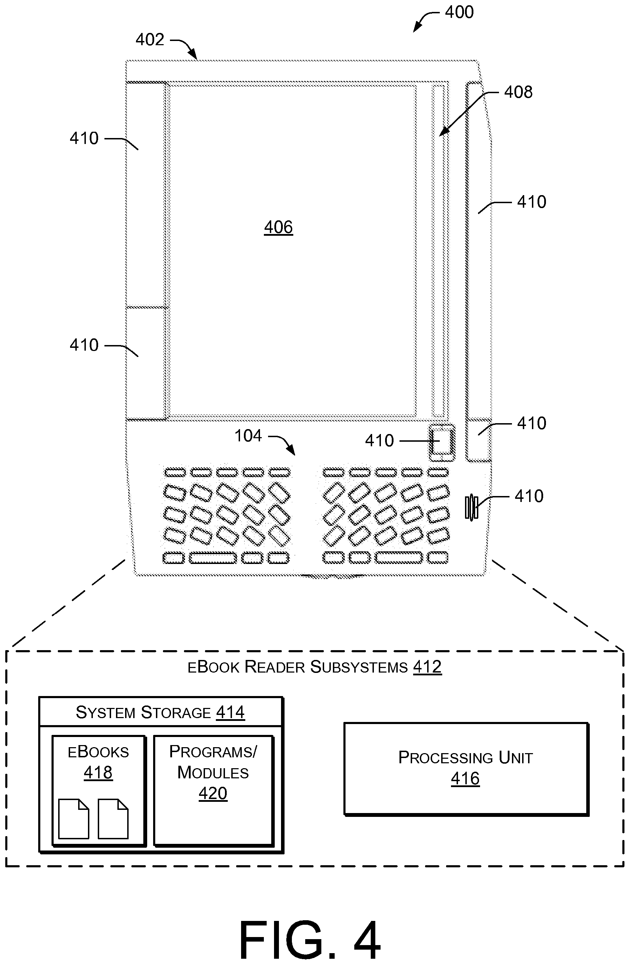

FIG. 4 illustrates one suitable display device 400 capable of employing invariant referencing techniques. However, virtually any other type of display device may be used to implement the invariant referencing described herein. In the illustrated implementation, the device 400 is embodied as a handheld eBook reader device. Various features of the display device 400 are described briefly below. However, a fuller description of this exemplary display device may be found in U.S. Patent Application No. 11/277,893, filed March 29, 2006, and entitled "Handheld Electronic Book Reader Device Having Dual Displays," which is incorporated herein by reference.

As shown in FIG. 4, the eBook reader device 400 has a body or housing 402, a keyboard 404, and a dual display system comprised of a first display 406 and a second display 408. The device keyboard 404 includes a plurality of alphabetic, numeric, and/or function keys for entry of user input.

The first display 406 in the dual display system presents content in a human-readable format to the user. The content presented in the first display 406 may be digital works, such as electronic books, newspapers, or other readable or viewable materials. For example, the display 406 provides the text of the electronic books and also depicts any illustrations, tables, or graphic elements that might be contained in the electronic books.

The second display 408 of the dual display system is a narrow screen located adjacent to the content display 406. The narrow display 408 is illustrated as being positioned to the right of the content display 406, although it may be located elsewhere in the housing 402 in other implementations. The narrow display screen 408 may be responsive to user input registered via, for example, a finger, a stylus, or other similar pointing device. Additionally, the narrow display screen 408 may enable presentation of graphic elements that correspond to content displayed in the content display 406.

The eBook reader device 400 may also include a variety of user inputs 410 to navigate through and among eBooks and digital works. Examples of user inputs that may be present include buttons, scroll wheels, thumb wheels, thumb sticks, sensors that detect and register movement of a user's thumb or finger, tactile sensors, or any other conventional user input mechanism.

The eBook reader device 400 also has various internal components, which are referred to generally as eBook reader subsystems 412. In one implementation, the subsystems 412 include system storage 414 and a processing unit 416. The processing unit 416 interacts with the system storage 414 to facilitate operation of the eBook reader device 400. The system storage 414 may be used to store a plurality of eBooks 418 and other content, as well as software programs or other executable modules 420 that may be executed by the processing unit. Examples of such programs or modules might include indexing modules indexing eBooks with invariant location reference identifiers, reader programs, control modules (e.g., power management), network connection software, operating models, display drivers, sensor algorithms, page turn detectors, and the like.

The system storage 414 may include volatile memory (such as RAM), nonvolatile memory, removable memory, and/or non-removable memory, implemented in any method or technology for storage of information, such as computer-readable instructions, data structures, program modules, or other data. Also, the processing unit 416 may include onboard memory in addition to or instead of the system storage 414. Some examples of storage media that may be included in the system storage 414 and/or processing unit 416 include, but are not limited to, RAM, ROM, EEPROM, flash memory or other memory technology, CD-ROM, digital versatile disks (DVD) or other optical storage, magnetic cassettes, magnetic tape, magnetic disk storage or other magnetic storage devices, or any other medium which can be used to store the desired information and which can be accessed by the eBook reader device 400. Any such computer storage media may be part of the eBook reader device 400.

Various instructions, methods and techniques described herein may be considered in the general context of computer-executable instructions, such as program modules, executed by one or more computers or other devices. Generally, program modules include routines, programs, objects, components, data structures, etc. for performing particular tasks or implementing particular abstract data types. These program modules and the like may be executed as native code or may be downloaded and executed, such as in a virtual machine or other just-in-time compilation execution environment. Typically, the functionality of the program modules may be combined or distributed as desired in various embodiments. An implementation of these modules and techniques may be stored on or transmitted across some form of computer-readable media.

### Overview of Invariant Location Referencing

Invariant location referencing makes it possible to meaningfully identify and communicate a specific location or segment of content in an eBook, regardless of screen size, font type or size, resolution, or other display conditions of the display device. Generally, this is accomplished by assigning unique reference identifiers at locations throughout the content of a digital work, or to individual segments of the digital work. These reference identifiers are not dependent on display conditions of a display device on which the digital work is displayed. In that sense, the reference characters are invariant. The invariant location reference identifiers may be provided in addition to any dividing indicia in the digital work itself (e.g., page numbers, chapter numbers, book numbers, section numbers, etc.) and any virtual (variable) page numbering, or may be provided instead of such dividing indicia and/or virtual page numbering. The invariant location reference identifiers provide a reliable means by which a user can determine a location of content in the digital work and approximately where the content is relative to the beginning and end of the digital work. Invariant location reference identifiers may also be used as a means of identifying a source of a quotation or excerpt from an eBook, or when one eBook references a passage from another eBook (e.g., See Shakespeare, "Romeo and Juliet", location 2105).

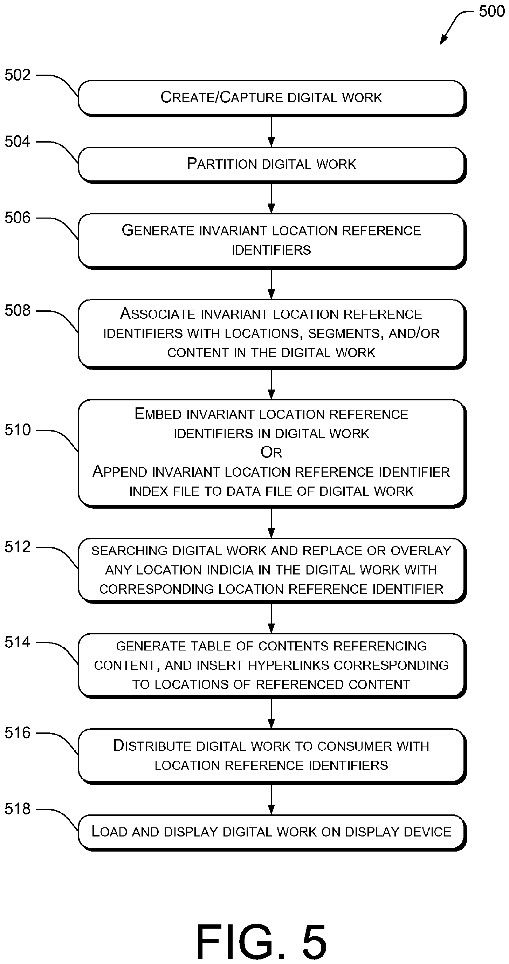

There are numerous ways of providing invariant location reference identifiers in, or in association with, content of a digital work. For example, invariant location reference identifiers may be embedded in, or appended to, a digital work after creation, but prior to distribution to a consumer. This approach is referred to herein as pre-processing. Alternatively, invariant location reference identifiers may be generated and associated with content of a digital work by a display device subsequent to distribution to a consumer and upon loading the digital work. This approach is referred to herein as post-processing. In still other implementations, a byte-count or address of data corresponding to content of the digital work may be used as the invariant location reference identifiers, in which case invariant location reference identifiers need not be specially generated. FIGS. 5-7 describe several exemplary methods of providing invariant location reference identifiers in, or in association with, content of a digital work.

### Exemplary Preprocessing Method of Indexing a Digital Work

FIG. 5 is a flowchart showing an exemplary method 500 of indexing a digital work with invariant location reference identifiers prior to distribution to a consumer ("preprocessing"). The method 500 may apply to any digital work comprising at least some text. The method 500 begins, at 502, when a digital work is first captured (e.g., by scanning) from a printed document or film, or is created as an original digital work.

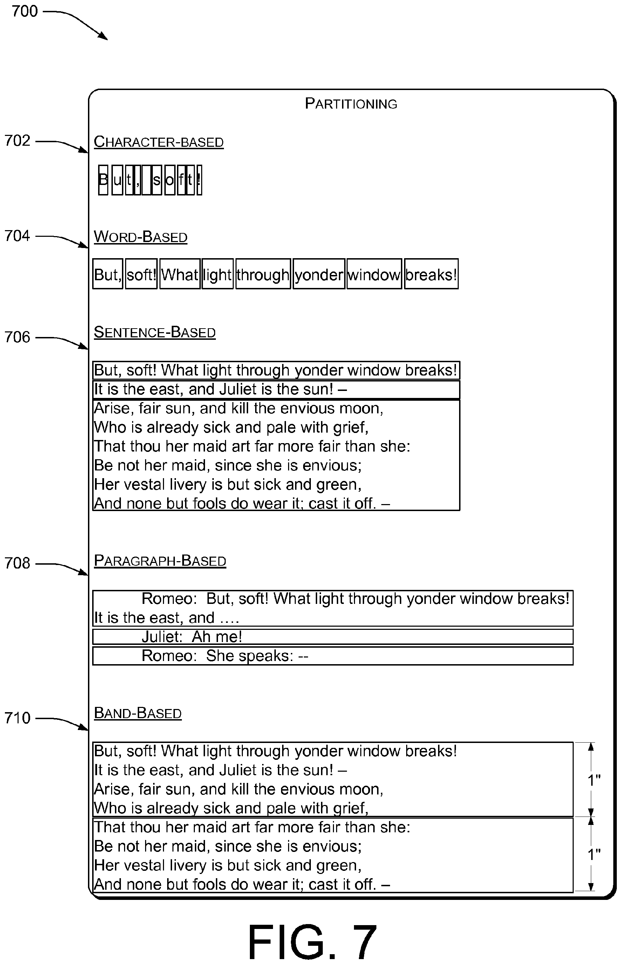

At 504, the digital work is partitioned into a plurality of segments. The digital work may be partitioned in numerous different ways. For example, in various implementations, each segment may correspond to an individual character, word, string of words, sentence, paragraph, or any other unit of textual content. Alternatively, each segment may correspond to a predetermined multiple of characters, words, sentences, or paragraphs (e.g., every tenth character, every other word, every fifth sentence, etc.). In still other implementations, the digital work may be partitioned into horizontal and/or vertical bands corresponding to predetermined areas of the original printed work (e.g., each segment may correspond to characters present in a one inch horizontal band of the original printed work). Each of these partitioning techniques will be described in more detail below with reference to FIG. 7.

A plurality of sequential, unique location reference identifiers is generated at 506, and, at 508, each segment of the digital work is sequentially assigned a unique location reference identifier. Thus, each location reference identifier is uniquely assigned to a corresponding segment of the digital work, regardless of display conditions under which the digital work is displayed. In other words, the location reference identifiers are invariant with respect to display conditions.

At 510, the invariant location reference identifiers are embedded, appended, or otherwise associated with locations or segments of the digital work. However, the location reference identifiers remain separate from the digital work in so far as the location reference identifiers are not characters of the digital work itself, but are separate identifiers that are associated with locations or segments of the digital work. Thus, the content of the digital work is unaltered by the provision of the location reference identifiers. Examples of ways in which the location reference identifiers may be associated with the digital work include attaching the location reference identifiers as meta data to the digital work, appending an index file of location reference identifiers to the digital work data file, and maintaining a location reference identifier index file apart from the digital work data file. However, location reference identifiers may also be associated with the digital work in any other known manner.

The digital work itself may or may not include some sort of indexing or dividing indicia of the content, such as page identifiers, chapter identifiers, section identifiers, figure identifiers, table identifiers, or the like. The invariant location references can be, but generally are not, based on any chapters, pages, or other dividing indicia in the body of the digital work. Thus, the location reference identifiers are generally generated independently of any location indicia in the digital work. Nevertheless, in some implementations, the location reference identifiers may be associated with the digital content based at least in part on location indicia in the digital work. In that case, at 512, the digital work may be searched for any dividing indicia in the digital work, and any such dividing indicia found may be replaced or overlaid with a corresponding invariant location reference identifier or a hyperlink to the same. Additionally, at 514, a table of contents may be generated, which references content of the digital work with hyperlinks to location reference identifiers corresponding to locations of the referenced content in the digital work.

Subsequently, at 516, the digital work is distributed to consumers along with the associated invariant location reference identifiers, and, at 518, the digital work may be loaded and displayed on a display device.

It should be understood that certain acts in method 500 need not be performed in the order described, may be modified and/or may be omitted entirely, depending on the circumstances. For example, the act 512 of searching for dividing indicia in the digital work and replacing or overlaying the dividing indicia with invariant location reference identifier and the act 514 of generating a table of contents can be omitted. Also, the order in which the acts of partitioning the digital work 504 and generating invariant location reference identifiers 506 are performed is not important and those acts may be reversed as desired.

### Exemplary Post-processing Method of Indexing a Digital Work

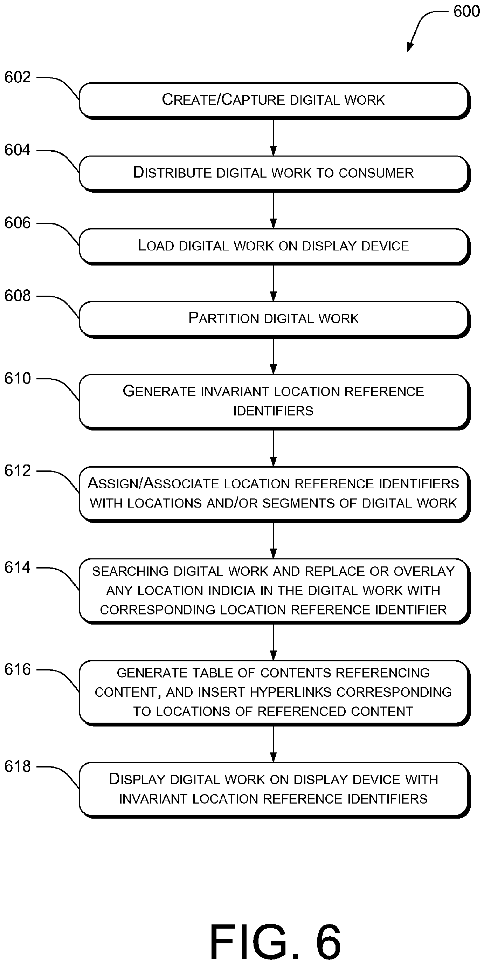

FIG. 6 is a flowchart showing an exemplary method 600 of indexing a digital work with invariant location reference identifiers subsequent to distribution to a consumer ("post-processing"). The method 600 is similar to that described above with respect to FIG. 5, except for the order and location at which invariant location reference identifiers are associated with a digital work. In this implementation, the invariant location reference identifiers are generated and associated with a digital work by the eBook reader or other display device, subsequent to distribution of the digital work to the consumer.

In method 600, the digital work is created or captured at 602, the digital work is distributed to consumers at 604, and loaded in memory of a display device at 606. At 608, the digital work is partitioned into segments by a program module in memory of the display device. Partitioning is performed in the same manner as discussed for method 500 above and explained further below with reference to FIG. 7. The program module of the display device also generates invariant location reference identifiers at 610, and, at 612, associates each invariant location reference identifier with a different location or segment of the partitioned digital work.

In some implementations, at 614, the program module of the display device may search the digital work for any dividing indicia in the digital work, and any such dividing indicia found may be replaced or overlaid with a corresponding invariant location reference identifier. Additionally, at 616, the program module of the display device may generate a table of contents, which references content of the digital work with hyperlinks to location reference identifiers corresponding to locations of the referenced content in the digital work. One or more of acts 608-616 may be performed automatically upon loading the digital work for display at 606.

At 618, the digital work is displayed on the display device along with the invariant location reference identifiers.

It should be understood that certain acts in method 600 need not be performed in the order described, may be modified and/or may be omitted entirely, depending on the circumstances. For example, the act 614 of searching for dividing indicia in the digital work and replacing or overlaying the dividing indicia with invariant location reference identifier and the act 616 of generating a table of contents can be omitted. Also, the order in which the acts of partitioning the digital work 608 and generating invariant location reference identifiers 610 are performed is not important and those acts may be reversed as desired.

### Exemplary Partitioning Methods

FIG. 7 is a block diagram illustrating some exemplary methods of partitioning a digital work, which may, but need not necessarily, be used to partition the digital work in the methods 500 and 600 described above. FIG. 7 shows five different partitioning approaches: character-based partitioning 702, word-based partitioning 704, sentence-based partitioning 706, paragraph-based partitioning 708, and band-based partitioning 710. In some implementations, each of these approaches may be applied such that each segment into which the digital work is partitioned contains approximately the same amount of textual content. This uniformity of segments makes navigation within a digital work more intuitive, because a user can equate each invariant location reference identifier with a generally uniform amount of textual content. However, in other implementations, the segments may contain different amounts of textual content.

In the character-based approach 702, the digital work is partitioned such that each character of the digital work is a separate segment. Thus, in the implementation shown, the phrase "But, soft!" is partitioned into ten segments. This approach provides the highest resolution of referencing within the digital work, but also requires the most processing resources and generates the largest index file of location references.

In the word-based approach 704, the digital work is partitioned such that each word of the digital work is a separate segment. For the purposes of this approach, each set of successively arranged characters separated by a space before and a space after will be treated as a word. Thus, in the implementation shown, the phrase "But, soft! What light through yonder window breaks!" is partitioned into eight segments. This approach provides somewhat lower resolution of referencing within the digital work, but also requires proportionately less processing resources and generates a proportionately smaller index file than the character-based approach.

In the sentence-based approach 706, the digital work is partitioned such that each sentence of the digital work is a separate segment. For the purposes of this approach, any string of characters beginning with the first character of the digital work, the first character following a period, or the first character following a hard return, and ending with a period, question mark, or exclamation point will be treated as a sentence. Thus, the passage shown in this implementation has been partitioned into three segments. This approach provides still lower resolution of referencing within the digital work, but also requires proportionately less processing resources and generates a proportionately smaller index file than the word-based approach.

In the paragraph-based approach 708, the digital work is partitioned such that each paragraph of the digital work is a separate segment. For the purposes of this approach, any string of characters beginning with the first character of the digital work, the first character following a hard return, and the first character following a tab indention, and ending with a hard return will be treated as a paragraph. Thus, the passage shown in this implementation has been partitioned into three segments. This approach provides still lower resolution of referencing within the digital work, but also requires proportionately less processing resources and generates a proportionately smaller index file than the sentence-based approach.

In each of the foregoing character-, word-, sentence-, and paragraph-based approaches, images (e.g., tables, figures, charts, and other non-text subject matter) in a digital work may be treated as a predetermined number of one or more segments, and assigned one or more invariant location reference identifiers corresponding to the assigned segments. That is, every image, regardless of display size, resolution, file size, or other display conditions, may be assigned a predetermined number of one or more invariant location reference identifiers. For example, every image in a digital work may be assigned a single invariant location reference identifier, which may be the next sequential invariant location reference identifier following the invariant location reference identifier assigned to text preceding the image. Alternatively, each image may be assigned any other predetermined number of invariant location reference identifiers.

In other implementations, images may be proportionately assigned invariant location reference identifiers, based on the size of data corresponding to the image. That is, an image might be assigned one invariant location reference identifier for each byte (or multiple bytes) of data of the image. In other implementations, images may be treated as if they were one or more words (e.g., all images are treated as one word, or small images are treated as ten words while large images are treated as fifty words). In still other implementations, an image may be assigned a number of invariant location reference identifiers corresponding to an amount of text occupying approximately the same amount of data as the image (e.g., if an image is represented by about the same amount of data as thirty characters, the image will be assigned the same number of invariant location reference identifiers as would thirty characters of text).

The band-based approach 710 may be applied if the digital work is scanned or otherwise captured from a printed document or film. In the band based approach 710, the digital work is partitioned into segments of text corresponding to predetermined areas of the printed document. The bands may be horizontal and/or vertical. In the example shown in FIG. 7, the digital work is partitioned into horizontal bands for every one inch of the printed document (or approximately one inch, to include an entire line of text or image). Each segment consists of the characters or images falling within the corresponding horizontal band. For the purposes of this approach, all the characters beginning with the first character in the band and ending with the last character in the band will be considered part of the segment corresponding to that band. Thus, the passage shown in this implementation has been partitioned into two segments.

In some implementations, the size of the bands may be based at least in part on the font size, line spacing, or other formatting of the original printed copy of the work. For example, it may be desirable to size the bands such that each band contains a predetermined number of lines of text. This approach tends to standardize the amount of textual content between successive invariant location reference identifiers by standardizing the number of lines of text corresponding to each invariant location reference identifier regardless of font size, line spacing, or other formatting. In an implementation in which the bands are sized to fit a predetermined number of lines, the band size will be larger for printed works having larger font size and/or line spacing. For example, four lines of double spaced text in fourteen point font will occupy a band size of about 1.5 inches, whereas four lines of single spaced text in ten point font will occupy a band size of about 0.75 inches.

The band-based approach 710 is well suited to partitioning digital works that include images, figures, charts, or other non-text objects, since the objects can be partitioned into bands in the same manner as text. In the character-, word-, sentence-, and paragraph-based approaches, such objects are generally treated as a predetermined number of one or more segments (e.g., an object corresponds to one segment, five segments, etc.), regardless of the size or shape of the object.

Each of the foregoing approaches may be done on an individual character-, word-, sentence-, paragraph-, or band-basis as shown in FIG. 7, or may be performed for a predetermined multiple of characters, words, sentences, paragraphs, or bands. For example, a digital work may be segmented every N characters, words, sentences, paragraphs, or bands, where N is any number greater than one.

Some implementations may employ a hybrid or combination of the foregoing partitioning approaches. In that case, the various partitioning approaches may be performed before distribution to consumers (preprocessing), after distribution to consumers (post-processing), or both. For example, in one exemplary implementation, a digital work may be coarsely partitioned using the band-based approach 710 during preprocessing, and then subsequently more finely partitioned (e.g., by a consumer's display device) using the character-based approach 702 or word-based approach 704.

Once a digital work has been indexed (and in some cases even without indexing), the digital work can be presented on a display device along with invariant location reference identifiers.

### Exemplary Displays of Digital Works with Invariant Location Referencing

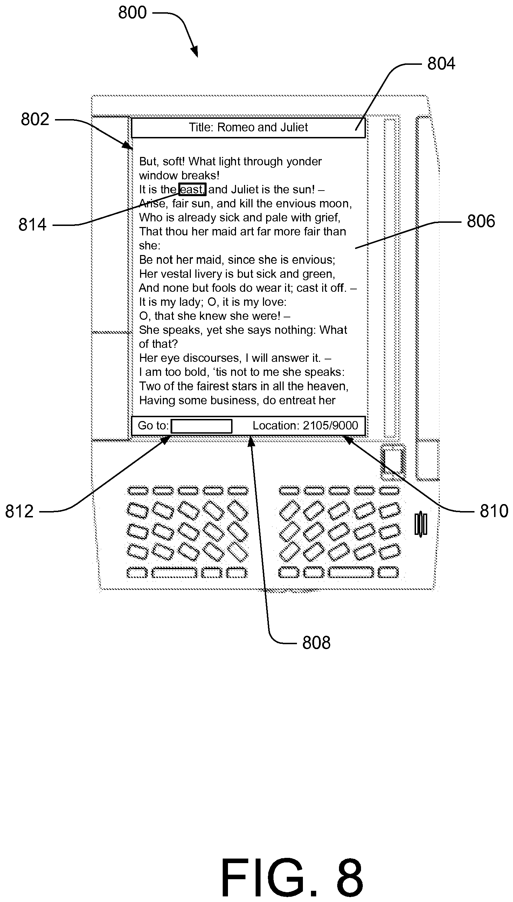

FIGS. 8-10 illustrate display devices displaying digital works along with invariant location reference identifiers according to several exemplary implementations.

FIG. 8 shows an eBook reader 800 having a display screen 802, on which are displayed a header pane 804, a reading pane 806, and a navigation pane 808. The header pane 804 displays a title, author, date, time, or any other pertinent data to a user. The reading pane 806 displays content of an eBook or digital work for consumption by a user. The navigation pane 808 includes various interfaces that allow a user to easily navigate within and among eBooks and other content stored in memory or system storage of the eBook reader 800.

In the implementation shown, the navigation pane 808 includes a location field 810, showing a current invariant location reference identifier (in this case 2105) relative to the total number of location reference identifiers in the eBook (in this case 9000). The invariant location reference identifier displayed in the location field 810 may be the invariant location reference identifier corresponding to the first content displayed on the display screen (in this case "B," "But," "But, Soft," etc. depending on the how the eBook was partitioned), the last content on the display screen (in this case "r," "her," etc.), or some selected content 814 on the display screen (in this case the word "east" is selected). This allows a user to know and communicate precisely where he or she is currently reading in the eBook and where the current location is relative to the beginning and end of the eBook content.

A search field 812 is also provided in the navigation bar 808. A user may enter an invariant location reference identifier in the search field 812 to skip to the corresponding portion of the eBook content.

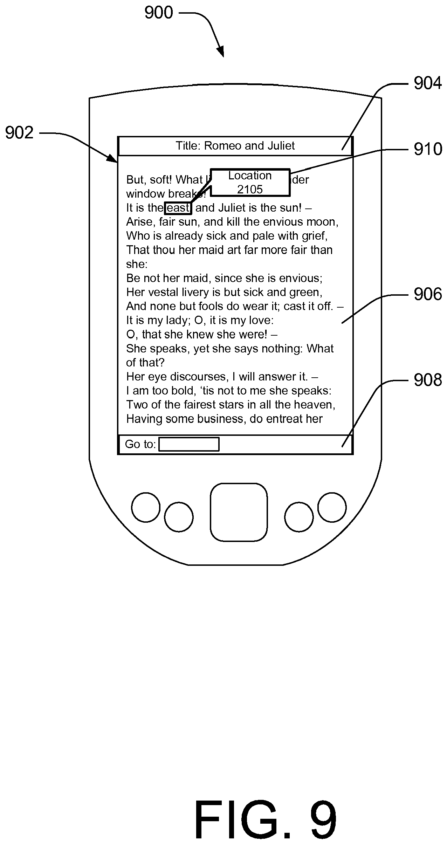

FIG. 9 illustrates a PDA device 900 having a display screen 902, on which are displayed a header pane 904, a reading pane 906, and a navigation pane 908 in a manner similar in most respects to that of FIG. 8 described above. However, in this implementation, instead of being displayed in the navigation bar, a location field 910 displaying the current invariant location reference identifier is overlaid over a portion of the reading pane 906 adjacent to a selected portion of the digital work. The location field 910 may be displayed upon user selection or pointing to a specific character, word, sentence, paragraph, or other portion of the digital work. In the implementation shown, a user has selected the word "east" and in response the location field 910 has been displayed in a callout window adjacent the word east indicating the current invariant location reference identifier (in this case 2105). Location field 910 may be displayed upon request from the reader or upon other triggering type events or commands (e.g., save ending location, reopening of file to last place left off, etc.).

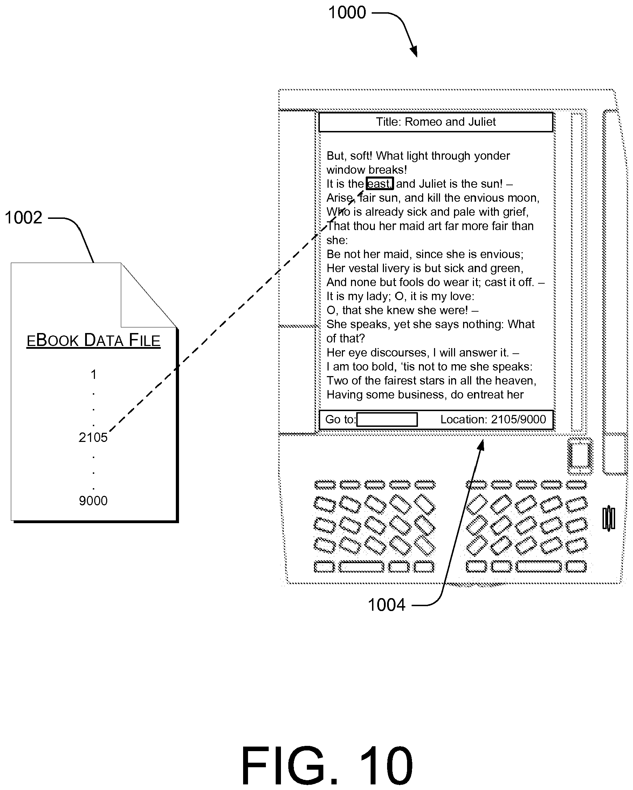

FIG. 10 shows an exemplary way in which a digital work may be displayed with invariant location reference identifiers without the need to index the digital work. In this implementation, a location within the digital work is determined based on a byte-count or some other unit of data of the underlying digital work.

Each character in a digital work is represented by units of data. Each unit of data corresponds to some portion of the digital work. For example, each byte of data generally corresponds to about one character of the digital work. Accordingly, to determine a location of content within a digital work, it is possible to map the content to a byte of data corresponding to that content and determine the address or byte-count for that byte of data. The address or byte-count can then serve as an invariant location reference identifier for the digital work without any additional indexing. The current address or byte-count can then be provided relative to the total number of bytes in the file underlying the digital work to provide an indication of the current location relative to the beginning and end of the digital work.

In the implementation shown in FIG. 10, the user has selected or pointed to the word "east" in the displayed content. The first letter of the word "east" corresponds to byte number 2105 out of 9000 total bytes of data in an eBook data file 1002 residing in memory or system storage of the eBook reader. Accordingly, location field 1004 of the eBook reader 1000 displays the location 2105/9000. While this implementation is described in terms of byte-count, any other unit of data can alternatively be used as invariant location reference identifiers.

In some cases, such as where the digital work includes images in-line with text content, the byte-count may appear to jump at the point where the image is located, since the image may correspond to a significant amount of data. For example, as small image might consume 20,000 bytes or more. To counteract this jumping appearance, the images may be stored at the beginning or end of the text content, and then the images may be referred to from within the text via image pointers of fixed or heuristically chosen byte sizes.

### Exemplary Method of Presenting a Digital Work

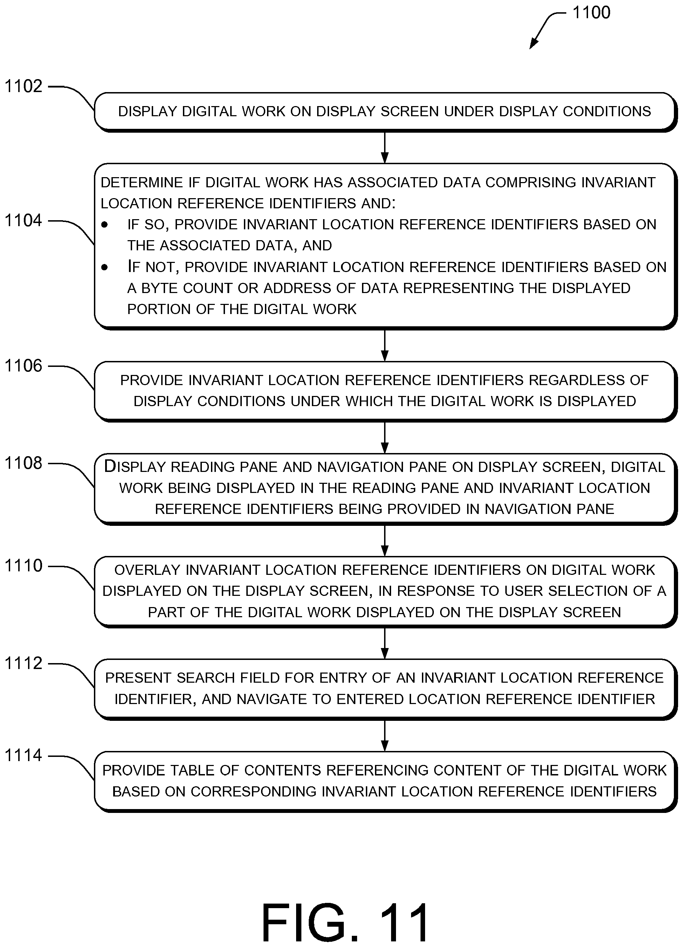

FIG. 11 is a flow chart showing an exemplary method 1100 of presenting a digital work along with invariant location referencing which may be implemented using the eBook reader, a computer monitor, a PDA, or any other suitable display device. For simplicity, the method 1100 is described as being implemented on the eBook reader of FIG. 4. For the purposes of describing the method of FIG. 11, it is assumed that one or more eBooks or other digital works are already stored in memory of the eBook reader.

Referring to again to FIG. 11, method 1100 includes, at 1102, displaying a portion of an eBook or digital work on a display screen under a set of display conditions (e.g., type of display device, screen size, font size, etc.). At 1104, a determination is made as to whether the digital work has any associated data comprising invariant location reference identifiers. If data comprising invariant location reference identifiers are determined to be present, the invariant location reference identifiers will be provided on the display screen based on the associated data. If associated data comprising invariant location reference identifiers are determined to be absent, the invariant location reference identifiers will be provided based on a byte count or other unit of data representing the displayed portion of the digital work.

At 1106, one or more invariant location reference identifiers are displayed which correspond to the portion of the digital work on the display screen. The invariant location reference identifiers are separate from the digital work in the sense that the location reference identifiers are not characters of the digital work itself, but are separate identifiers that are associated with locations or segments of the digital work. Thus, the content of the digital work is unaltered by the provision of the location reference identifiers. The location reference identifiers may be associated with the digital work by attaching the location reference identifiers as meta data to the digital work, appending an index file of location reference identifiers to the digital work data file, maintaining a location reference identifier index file apart from the digital work data file, or in any other known manner. In this manner, each invariant location reference identifier is provided along with the corresponding portion of the digital work, regardless of the display conditions under which the portion of the digital work is displayed.

In some implementations, at 1108, display and reading panes are displayed on the display screen. In that case, the displayed portion of the digital work is displayed in the reading pane and the invariant location reference identifiers are provided in the navigation pane. Additionally or alternatively, at 1110, invariant location reference identifiers may be overlaid on the parts of the digital work with which the invariant location reference identifiers are respectively associated. Also additionally or alternatively, the invariant location reference identifiers are provided in response to user selection of or pointing to a part (e.g., a character, word, sentence, paragraph, object, or other content) of the digital work displayed on the display screen.

In various implementations, the invariant location reference identifiers may correspond to one or more characters, words, sentences, paragraphs, images, figures, bands, or objects of the digital work. The invariant location reference identifiers may include any combination of letters, numbers, punctuation, symbols, or other characters. For ease of use, it may be desirable that the invariant location reference identifiers are numerals and/or include an easily manageable number of characters (e.g., at most four characters). Also, the invariant location reference identifiers may, but need not, include a decimal point, comma, colon, or other punctuation (e.g., 210.5 or 2,105 or 2:1:05) to assist a user in navigating the digital work.

However, invariant location reference identifiers having any number of digits and/or characters may be used. For example, more digits or characters may be desirable in cases using a partitioning approach to partition a work into having more than 9999 segments (e.g., a work partitioned using the character-based approach and having more than 9999 characters, or a work partitioned using the byte-based approach and having more than 9999 bytes). Additionally or alternatively, works having more segments could be scaled down to a desired number of digits (e.g., by truncating the actual number of invariant location reference identifiers - 123,456 truncated to 1,234, dividing by a predetermined factor determined factor, dividing by a factor heuristically determined on a per-title basis to optimize display, etc.).

It may be desirable in some instances to assign each invariant location reference identifier to a substantially uniform amount of content. Thus, in some implementations, shorter works may have fewer invariant location reference identifiers than longer works. However, in other implementations, digital works may have a standard number of invariant location reference identifiers (e.g., 9999). Regardless of the nature and length of the invariant location reference identifiers displayed, it may be possible in some implementations to allow for more specific or precise referencing within the digital work. For example, referring back to FIG. 8, even though the invariant location reference identifier is displayed as a four digit number (i.e., 2105), a user may enter a more specific invariant location reference identifier (e.g., 2105.25) in the search field and will be taken to the location of the more specific invariant location reference identifier in the digital work. This precision may be accomplished by, for example, partitioning the digital work into more segments than the displayed number of invariant location reference identifiers ("hidden precision"), or by interpolating a location within each segment as a percentage of the segment ("interpolation").

In the hidden precision approach, the digital work is partitioned into a larger number of segments than are displayed (e.g., work is partitioned into 999,999 segments, but the work is displayed as having 9,999 invariant location reference identifiers). Thus, a user is able to search within the additional two decimal places that are hidden and not displayed. In the interpolation approach, the work is partitioned into the same number of segments as displayed invariant location reference identifiers (e.g., 9,999), and the approximate location within the segment is determined as a percentage of the additional places of precision (e.g., 2105.25 is 25% of the way between segments 2105 and 2106). Thus, applying the interpolation approach to the example of FIG. 8, invariant location reference identifiers 2105.0 - 2105.24 correspond to the letter "E", 2105.25 - 2105.49 correspond to the letter "A", 2105.50 - 2105.74 correspond to the letter "S", and 2105.75 - 2105.99 correspond to the letter "T". The interpolation approach may also be implemented using the band-based partitioning approach, but partitioning each segment into a number of vertical bands equal to the inverse of the additional places of precision (e.g., 1/0.25 = 4 vertical bands), rounded up or down as necessary.

In some implementations, the method 1100 may further include, at 1112, presenting a search field for entry of an invariant location reference identifier and, in response to user entry of the invariant location reference identifier in the search field, updating the display screen to display a portion of the digital work corresponding to the entered invariant location reference identifier. Also in some implementations, the method 1100 may include, at 1114, providing a table of contents referencing content of the digital work based on corresponding invariant location reference identifiers.

It should be understood that certain acts in method 1100 need not be performed in the order described, may be modified and/or may be omitted entirely, depending on the circumstances. For example, any one or more of acts 1106-1114 may be omitted.

Moreover, any of the acts of any of the methods described herein may be implemented by a processor or other computing device based on instructions stored on one or more computer-readable media. Computer-readable media can be any available media that can be accessed by a preprocessing system, display device, and/or digital work, as appropriate. By way of example, and not limitation, computer-readable media may comprise computer storage media and communication media. Computer storage media includes volatile and nonvolatile, removable and non-removable media implemented in any method or technology for storage of information such as computer-readable instructions, data structures, program modules or other data. Computer storage media includes, but is not limited to, RAM, ROM, EEPROM, flash memory or other memory technology, CD-ROM, digital versatile disks (DVD) or other optical storage, magnetic cassettes, magnetic tape, magnetic disk storage or other magnetic storage devices, or any other medium which can be used to store the desired information and which can accessed by the preprocessing system, display device, and/or digital work. Combinations of the any of the above should also be included within the scope of computer-readable media.

### Data Structure of eBook

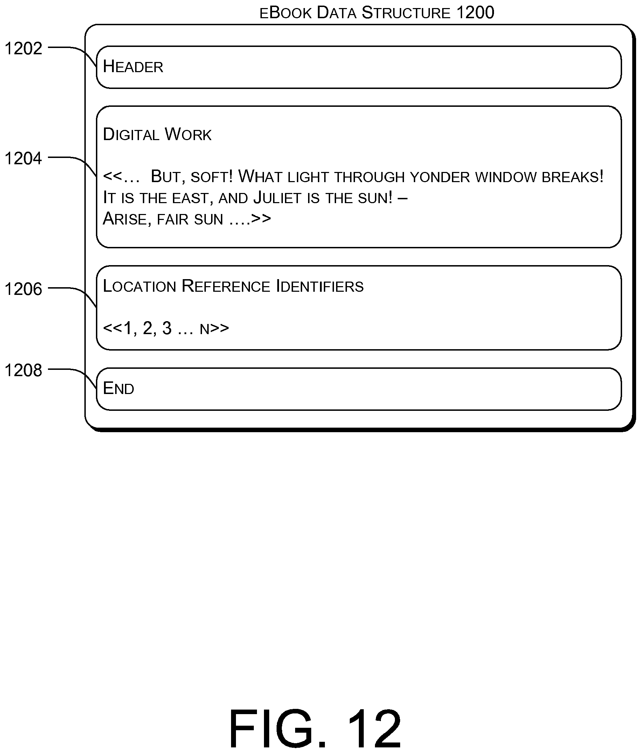

FIG. 12 illustrates an exemplary eBook data structure 1200 including a header field 1202, a content field 1204 comprising data representing an eBook or digital work, a location reference field 1206 including an index of invariant location reference identifiers and an indication of the portions of the content to which they correspond, and an end data field 1208 designating an end of the data structure 1200. In this implementation, the invariant location reference identifiers are configured as a separate data field from the content of the digital work, but are part of the same data structure. The data structure 1200 may be in any desired programming language, and may include various other data fields as necessary or desired.

The location reference field 1206 may include a variety of other information regarding the invariant location reference identifiers and how they are indexed with respect to the digital work, such as, for example, a table of contents, a list of hyperlinks or pointers to various locations within the digital work, a list of byte-counts or addresses in the underlying file of the digital work, and/or any other information about how the digital work is indexed.

## Claims

1. A method of presenting a digital work comprising text, the method comprising:
displaying a portion of the digital work on a display screen (802) under a set of display conditions; and
providing on the display screen one or more invariant location reference identifiers (814) based upon a byte-count corresponding to the portion of the digital work on the display screen, wherein the invariant location reference identifiers correspond to the byte-count relative to a total number of bytes of the digital work, the invariant location reference identifiers being separate from and created after the digital work,
wherein each invariant location reference identifier is provided along with the corresponding portion of the digital work, regardless of the display conditions under which the portion of the digital work is displayed.

2. A method of indexing (500) a digital work comprising text, the method comprising:
partitioning (504) the digital work into a plurality of segments;
generating (506) a plurality of sequential, unique invariant location reference identifiers; and
sequentially (508) assigning each segment of the digital work a unique invariant location reference identifier based upon a byte-count relative to a total number of bytes of the digital work, such that each invariant location reference identifier is uniquely assigned with a corresponding segment of the digital work, regardless of display conditions under which the digital work is displayed, the invariant location reference identifiers being separate from the digital work.

3. The method of claim 2, further comprising:
displaying a portion of the digital work on a display screen under a set of display conditions; and
providing on the display screen one or more invariant location reference identifiers corresponding to the portion of the digital work on the display screen,
wherein each invariant location reference identifier is provided along with the corresponding portion of the digital work, regardless of the display conditions under which the portion of the digital work is displayed.

4. The method according to any one of claims 1 or 3, further comprising displaying a reading pane and a navigation pane on the display screen, the portion of the digital work being displayed in the reading pane and the invariant location reference identifier(s) being provided in the navigation pane.

5. The method according to any one of claims 1 or 3-4, wherein the invariant location reference identifier(s) are provided by being overlaid on a part of the digital work displayed on the display screen.

6. The method according to any one of claims 1 or 3-5, wherein the invariant location reference identifier(s) are provided in response to user selection of a part of the digital work displayed on the display screen.

7. The method according to any one of the preceding claims, wherein each invariant location reference identifier is based at least in part on a text character, a word or string of words, a sentence, a paragraph, a figure, an image, a chart, a table, or a non-text object representing a portion of the digital work.

8. The method according to any one of the preceding claims, wherein each invariant location reference identifier comprises a numeric identifier having at most four digits.

9. The method according to any one of claims 1 or 3-8, further comprising:
determining if the digital work has associated data comprising invariant location reference identifiers, and based on this determination:
providing the invariant location reference identifiers based on the associated data comprising invariant location reference identifiers, if associated data comprising invariant location reference identifiers is determined to be present, and
providing the invariant location reference identifiers based on a byte number of data representing the displayed portion of the digital work, if associated data comprising invariant location reference identifiers is determined to be absent.

10. The method according to any one of claims 1 or 3-9, further comprising providing a table of contents referencing content of the digital work based on corresponding invariant location reference identifiers.

11. The method according to any one of claims 2-3, 7, or 8, further comprising capturing the digital work from a printed copy of the work prior to partitioning, wherein partitioning the digital work comprises dividing the digital work into horizontal bands of predetermined height, the predetermined height being based at least in part on a height of each page of the printed copy of the work.

12. The method according to any one of the preceding claims, further comprising searching the digital work for any location indicia in the digital work, and replacing or overlaying the locating indicia in the digital work with a corresponding location reference identifier.

13. One or more computer-readable media comprising computer-readable instructions that, when executed by a processor, configure the processor to perform the method according to any one of the preceding claims.

14. An apparatus comprising:
one or more processors; and
memory to store computer-executable instructions that, when executed by the one or more processors, performs the method according to any one of the preceding claims.

## Patentansprüche

1. Verfahren zum Präsentieren eines digitalen Werks, das Text umfasst, wobei das Verfahren Folgendes umfasst:
Anzeigen eines Abschnitts des digitalen Werks auf einem Anzeigebildschirm (802) unter einem Satz von Anzeigebedingungen und
Bereitstellen auf dem Anzeigebildschirm einer oder mehrerer invarianter Ortsbezugskennungen (814) auf der Grundlage einer Byte-Anzahl, die dem Abschnitt des digitalen Werks auf dem Anzeigebildschirm entsprechen, wobei die invarianten Ortsbezugskennungen der Byte-Anzahl in Bezug auf eine Gesamtanzahl von Bytes des digitalen Werks entsprechen und die invarianten Ortsbezugskennungen vom digitalen Werk getrennt und nach ihm erstellt sind, wobei
jede invariante Ortsbezugskennung zusammen mit dem entsprechenden Abschnitt des digitalen Werks ungeachtet der Anzeigebedingungen, unter denen der Abschnitt des digitalen Werks angezeigt wird, bereitgestellt wird.

2. Verfahren zum Indizieren (500) eines digitalen Werks, das Text umfasst, wobei das Verfahren Folgendes umfasst:
Partitionieren (504) des digitalen Werks in mehrere Segmente;
Erzeugen (506) mehrerer sequentieller eindeutiger invarianter Ortsbezugskennungen und
sequentielles (508) Zuweisen einer eindeutigen invarianten Ortsbezugskennung zu jedem Segment des digitalen Werks auf der Grundlage einer Byte-Anzahl in Bezug auf eine Gesamtanzahl von Bytes des digitalen Werks, derart, dass jede invariante Ortsbezugskennung einem entsprechenden Segment des digitalen Werks eindeutig zugewiesen ist, ungeachtet der Anzeigebedingungen, unter denen der Abschnitt des digitalen Werks angezeigt wird, wobei die invarianten Ortsbezugskennungen vom digitalen Werk getrennt sind.

3. Verfahren nach Anspruch 2, das ferner Folgendes umfasst:
Anzeigen eines Abschnitts des digitalen Werks auf einem Anzeigebildschirm unter einem Satz von Anzeigebedingungen und
Bereitstellen auf dem Anzeigebildschirm einer oder mehrerer invarianter Ortsbezugskennungen, die dem Abschnitt des digitalen Werks auf dem Anzeigebildschirm entsprechen, wobei
jede invariante Ortsbezugskennung zusammen mit dem entsprechenden Abschnitt des digitalen Werks ungeachtet der Anzeigebedingungen, unter denen der Abschnitt des digitalen Werks angezeigt wird, bereitgestellt wird.

4. Verfahren nach einem der Ansprüche 1 oder 3, das ferner das Anzeigen eines Lesebereichs und eines Navigationsbereichs auf dem Anzeigebildschirm umfasst, wobei der Abschnitt des digitalen Werks im Lesebereich angezeigt wird und die eine oder die mehreren invarianten Ortsbezugskennungen im Navigationsbereich bereitgestellt werden.

5. Verfahren nach einem der Ansprüche 1 oder 3-4, wobei die eine oder die mehreren invarianten Ortsbezugskennungen bereitgestellt werden, indem sie einem Teil des digitalen Werks, der auf dem Anzeigebildschirm angezeigt wird, überlagert werden.

6. Verfahren nach einem der Ansprüche 1 oder 3-5, wobei die eine oder die mehreren invarianten Ortsbezugskennungen als Antwort auf eine Anwenderauswahl eines Teils des digitalen Werks, das auf dem Anzeigebildschirm angezeigt wird, bereitgestellt werden.

7. Verfahren nach einem der vorhergehenden Ansprüche, wobei jede invariante Ortsbezugskennung mindestens teilweise auf einem Textzeichen, einem Wort oder einer Folge von Wörtern, einem Satz, einem Absatz, einer Figur, einem Bild, einer Grafik, einer Tabelle oder einem Nicht-Text-Objekt, das einen Abschnitt des digitalen Werks repräsentiert, basiert.

8. Verfahren nach einem der vorhergehenden Ansprüche, wobei jede invariante Ortsbezugskennung eine numerische Kennung, die höchstens vier Stellen hat, enthält.

9. Verfahren nach einem der Ansprüche 1 oder 3 bis 8, das ferner Folgendes umfasst:
Bestimmen, ob dem digitalen Werk Daten zugeordnet sind, die invariante Ortsbezugskennungen umfassen, und auf der Grundlage dieser Bestimmung
Bereitstellen der invarianten Ortsbezugskennungen auf der Grundlage der zugeordneten Daten, die invariante Ortsbezugskennungen umfassen, wenn bestimmt wird, dass zugeordnete Daten, die invariante Ortsbezugskennungen umfassen, vorliegen, und
Bereitstellen der invarianten Ortsbezugskennungen auf der Grundlage einer Byte-Anzahl von Daten, die den angezeigten Abschnitt des digitalen Werks repräsentieren, wenn bestimmt wird, dass zugeordnete Daten, die invariante Ortsbezugskennungen umfassen, nicht vorliegen.

10. Verfahren nach einem der Ansprüche 1 oder 3-9, das ferner das Bereitstellen eines Inhaltsverzeichnisses, das Inhalte des digitalen Werks auf der Grundlage entsprechender invarianter Ortsbezugskennungen referenziert, umfasst.

11. Verfahren nach einem der Ansprüche 2-3, 7 oder 8, das ferner das Aufnehmen des digitalen Werks von einer gedruckten Kopie des Werks vor dem Partitionieren umfasst, wobei das Partitionieren des digitalen Werks das Unterteilen des digitalen Werks in horizontale Bänder vorgegebener Höhe umfasst, wobei die vorgegebene Höhe mindestens teilweise auf einer Höhe jeder Seite der gedruckten Kopie des Werkes basiert.

12. Verfahren nach einem der vorhergehenden Ansprüche, das ferner das Durchsuchen des digitalen Werks nach beliebigen Ortsmarkierungen im digitalen Werk und das Ersetzen oder Überlagern der Ortsmarkierungen im digitalen Werk mit einer entsprechenden Ortsbezugskennung umfasst.

13. Ein oder mehrere computerlesbare Medien, die computerlesbare Anweisungen enthalten, die dann, wenn sie durch einen Prozessor ausgeführt werden, den Prozessor so konfigurieren, das er Verfahren nach einem der vorhergehenden Ansprüche ausführen kann.

14. Vorrichtung, die Folgendes umfasst:
einen oder mehrere Prozessoren und
einen Speicher, um computerausführbare Anweisungen zu speichern, die, wenn sie durch den einen oder die mehreren Prozessoren ausgeführt werden, das Verfahren nach einem der vorhergehenden Ansprüche durchführen.

## Revendications

1. Procédé de présentation d'un ouvrage numérique comprenant du texte, le procédé comprenant :
l'affichage d'une partie de l'ouvrage numérique sur un écran d'affichage (802) sous un ensemble de conditions d'affichage ; et
la fourniture sur l'écran d'affichage d'un ou plusieurs identifiants de référence d'emplacement invariants (814) sur la base d'un nombre d'octets correspondant à la partie de l'ouvrage numérique sur l'écran d'affichage, les identifiants de référence d'emplacement invariants correspondant au nombre d'octets par rapport à un nombre total d'octets de l'ouvrage numérique, les identifiants de référence d'emplacement invariants étant séparés de et créés après l'ouvrage numérique,
dans lequel chaque identifiant de référence d'emplacement invariant est fourni avec la partie correspondante de l'ouvrage numérique, indépendamment des conditions d'affichage sous lesquelles la partie de l'ouvrage numérique est affichée.

2. Procédé d'indexation (500) d'un ouvrage numérique comprenant du texte, le procédé comprenant :
le partage (504) de l'ouvrage numérique en une pluralité de segments ;
la génération (506) d'une pluralité d'identifiants de référence d'emplacement invariants séquentiels, uniques ; et
l'affectation séquentielle (508) à chaque segment de l'ouvrage numérique d'un identifiant de référence d'emplacement invariant unique sur la base d'un nombre d'octets par rapport à un nombre total d'octets de l'ouvrage numérique, de telle sorte que chaque identifiant de référence d'emplacement invariant est affecté de façon unique à un segment correspondant de l'ouvrage numérique, indépendamment de conditions d'affichage sous lesquelles l'ouvrage numérique est affiché, les identifiants de référence d'emplacement invariants étant séparés de l'ouvrage numérique.

3. Procédé de la revendication 2, comprenant en outre :
l'affichage d'une partie de l'ouvrage numérique sur un écran d'affichage sous un ensemble de conditions d'affichage ; et
la fourniture sur l'écran d'affichage d'un ou plusieurs identifiants de référence d'emplacement invariants correspondant à la partie de l'ouvrage numérique sur l'écran d'affichage,
dans lequel chaque identifiant de référence d'emplacement invariant est fourni avec la partie correspondante de l'ouvrage numérique, indépendamment des conditions d'affichage sous lesquelles la partie de l'ouvrage numérique est affichée.

4. Procédé selon l'une quelconque des revendications 1 ou 3, comprenant en outre l'affichage d'un volet de lecture et d'un volet de navigation sur l'écran d'affichage, la partie de l'ouvrage numérique étant affichée dans le volet de lecture et le ou les identifiants de référence d'emplacement invariants étant fournis dans le volet de navigation.

5. Procédé selon l'une quelconque des revendications 1 ou 3 et 4, dans lequel le ou les identifiants de référence d'emplacement invariants sont fournis en étant superposés sur une partie de l'ouvrage numérique affichée sur l'écran d'affichage.

6. Procédé selon l'une quelconque des revendications 1 ou 3 à 5, dans lequel le ou les identifiants de référence d'emplacement invariants sont fournis en réponse à la sélection par un utilisateur d'une partie de l'ouvrage numérique affichée sur l'écran d'affichage.

7. Procédé selon l'une quelconque des revendications précédentes, dans lequel chaque identifiant de référence d'emplacement invariant est basé au moins en partie sur un caractère de texte, un mot ou une chaîne de mots, une phrase, un paragraphe, une figure, une image, un graphique, un tableau, ou un objet non textuel représentant une partie de l'ouvrage numérique.

8. Procédé selon l'une quelconque des revendications précédentes, dans lequel chaque identifiant de référence d'emplacement invariant comprend un identifiant numérique ayant au maximum quatre chiffres.

9. Procédé selon l'une quelconque des revendications 1 ou 3 à 8, comprenant en outre :
la détermination que l'ouvrage numérique a ou non des données associées comprenant des identifiants de référence d'emplacement invariants, et sur la base de cette détermination :
la fourniture des identifiants de référence d'emplacement invariants sur la base des données associées comprenant des identifiants de référence d'emplacement invariants, s'il est déterminé que des données associées comprenant des identifiants de référence d'emplacement invariants sont présentes, et
la fourniture des identifiants de référence d'emplacement invariants sur la base d'un nombre d'octets de données représentant la partie affichée de l'ouvrage numérique, s'il est déterminé que des données associées comprenant des identifiants de référence d'emplacement invariants sont absentes.

10. Procédé selon l'une quelconque des revendications 1 ou 3 à 9, comprenant en outre la fourniture d'une table des matières référençant le contenu de l'ouvrage numérique sur la base d'identifiants de référence emplacement invariants correspondants.

11. Procédé selon l'une quelconque des revendications 2 et 3, 7, ou 8, comprenant en outre la capture de l'ouvrage numérique à partir d'une copie imprimée de l'ouvrage avant le partage, le partage de l'ouvrage numérique comprenant la division de l'ouvrage numérique en bandes horizontales de hauteur prédéterminée, la hauteur prédéterminée étant basée au moins en partie sur une hauteur de chaque page de la copie imprimée de l'ouvrage.

12. Procédé selon l'une quelconque des revendications précédentes, comprenant en outre la recherche dans l'ouvrage numérique de tous indices d'emplacement dans l'ouvrage numérique, et le remplacement ou le recouvrement des indices d'emplacement dans l'ouvrage numérique par un identifiant de référence d'emplacement correspondant.

13. Un ou plusieurs supports lisibles par ordinateur comprenant des instructions lisibles par ordinateur qui, lorsqu'elles sont exécutées par un processeur, configurent le processeur pour effectuer le procédé selon l'une quelconque des revendications précédentes.

14. Appareil comprenant :
un ou plusieurs processeurs ; et
une mémoire pour stocker des instructions exécutables par ordinateur qui, lorsqu'elles sont exécutées par le ou les processeurs, effectuent le procédé selon l'une quelconque des revendications précédentes.
